# EUROPÄISCHE PATENTSCHRIFT

(11) **EP 4 331 932 B1**
(45) Veröffentlichungstag und Bekanntmachung des Hinweises auf die Patenterteilung: **07.05.2025**
(21) Anmeldenummer: 23187611.1
(22) Anmeldetag: 25.07.2023
(51) Int. Cl.: B60T 17/22, B60T 8/32, B60T 8/34, B60T 8/36

(54) **BAUGRUPPE EINES BREMSSYSTEMS**
ASSEMBLY OF A BRAKE SYSTEM
ENSEMBLE D'UN SYSTÈME DE FREINAGE

(30) Priorität: 29.08.2022 DE 102022121745
(43) Veröffentlichungstag der Anmeldung: 06.03.2024
(73) Patentinhaber: AUDI AG, 85057 Ingolstadt (DE)
(72) Erfinder: Wolfram, Christopher, 07343 Wurzbach (DE)

(56) Entgegenhaltungen:
- US-A1- 2018 265 062
- US-A1- 2020 114 894

## Beschreibung

Die Erfindung betrifft eine Baugruppe eines Bremssystems für ein Fahrzeug gemäß der im Oberbegriff des Patentanspruches 1 angegebenen Art.

Neben klassischen Hydraulikbremssystemen, bei denen der Bremsdruck über ein fremdbetätigtes Bremspedal erzeugt wird, sind auch elektrohydraulische Fremdkraft-Bremssysteme und sogenannte Brake-By-Wire Bremssysteme bekannt.

Bei einer Hydraulikbremse wird die Bremskraft hydraulisch übertragen. D.h. ein Fahrer betätigt über das Bremspedal einen Kolben im Hauptbremszylinder, um Bremsflüssigkeit über Leitungen und Schläuche an die Radbremsen zu leiten und Bremsdruck in den Radbremsen aufzubauen. Dabei kann das Bremssystem ein elektronisch gesteuertes Fahrerassistenzsystem aufweisen, beispielsweise ein ESC-Bremsregelmodul, das über Sensoren einen kritischen Fahrzeugzustand erkennt und durch gezieltes Bremsen einzelner Räder dem Fahrer die Kontrolle über das Fahrzeug sichert. Das Bremsregelmodul, das auch als Bremsregelsystem bezeichnet wird, ist regelmäßig unmittelbar in Fahrtrichtung vor der Stirnwand positioniert. Es ist jedoch auch denkbar, dass es im Vorderwagenpackage freier positioniert ist, wobei es über Fluidleitungen mit dem Hauptbremszylinder verbunden ist.

Bei einem elektrohydraulischen Fremdkraft-Bremssystem wirkt die ausgeübte Fußkraft lediglich als Steuersignal zum Ansteuern des Bremssystems. Der hydraulische Bremsdruck für die Radbremsen wird durch ein elektrisches Signal geregelt. Eine Auslenkung des Bremspedals aus seiner Ruhelage ist sensorisch detektiert, daraus wird ein Steuersignal ermittelt und eine Druckbereitstellungseinrichtung eines Bremsregelmoduls wird angesteuert, um den Bremsdruck in den Radbremsen aufzubauen. Das elektrohydraulische Bremssystem ist von elektrischer Energie abhängig und weist insbesondere eine hydraulische Rückfallebene auf. Bei einem Ausfall der Steuereinheit wird über Ventile der Druckbereitstellungeinrichtung eine direkte Verbindung zwischen dem Hauptbremszylinder und den Radbremsen einer Achse hergestellt, so dass eine Bremskraft durch die Muskelkraft des Fahrers aufgebaut wird. Das bedingt eine unmittelbare Anordnung des Bremsregelmoduls direkt an der Spritzwand des Fahrzeugs.

Sogenannte "Brake-By-Wire" Bremssysteme kommen immer häufiger zum Einsatz, beispielsweise bei hochautomatisiertem Fahren ab Level 3, welches ermöglicht, dass der Fahrzeugnutzer zeitweise nicht in der Fahrverantwortung ist und das Bremsen des Fahrzeugs autonom stattfinden kann. Aufgrund von Daten und einer Vielzahl von Fahrzeugsensoriken steuert eine Steuereinheit eine Druckbereitstellungseinrichtung an, die in den Bremskreisen einen Bremsdruck aufbaut. Aufgrund der Abhängigkeit dieses Bremssystems von der Funktionssicherheit der Fahrzeugelektronik ist eine Rückfallebene vorhanden, die bei Ausfall der Normalebene eingreift und einen Bremsdruck aufbaut. In der DE 10 2017 211 955 A1 ist beispielsweise ein Bremssystem für ein insbesondere hochautomatisiertes Fahrzeug beschrieben.

Durch die mechanische Entkoppelung des "Brake-By-Wire" Bremssystems müssen die Bremsregelmodule der jeweiligen Normal- und Rückfallebene nicht mehr zwingend an einer bestimmten Position vor dem Fahrer direkt an der Spritzwand des Fahrzeugs montiert sein, sondern können im Vorderwagenpackage freier und einfacher positioniert sein.

Üblicherweise wird ein Bremsregelmodul eines Bremssystems mit einer Haltevorrichtung vormontiert und anschließend als Baugruppe in das Fahrzeug eingebaut. Dabei ist das Bremsregelmodul unter Zwischenschaltung der Haltevorrichtung mit der Fahrzeugkarosserie verbunden. Bricht diese Haltevorrichtung an einer beliebigen Stelle, z.B. an einem Haltearm, vergrößert sich der Bewegungsfreiraum des Bremsregelmoduls. Das Gewicht des Bremsregelmoduls führt zu einer erhöhten Belastung von Fluidanschlüssen sowie Fluidleitungen. Durch die vom Fahrwerk übertragenen Anregungen kann es zu weiteren Beschädigungen kommen, beispielsweise zu einem Bruch der Fluidleitungen oder -anschlüssen. Die Folge ist ein Verlust von Bremsfluid und Druckverlust an den Radbremsen. Technisch ist der Bruch der Haltevorrichtung schwer zu detektieren, deswegen kann ein Fahrzeug lange unbemerkt mit der gebrochenen Haltevorrichtung fahren, ohne dass es seitens eines Fahrzeugsystems detektiert oder angezeigt wird. In der Folge kann es jedoch möglicherweise zu einem Totalausfall des Bremssystems kommen. Aus dem Stand der Technik sind Bremssysteme bekannt, denen eine Anschlagvorrichtung zugeordnet ist, die ein akustisches Warnsignal auslöst. So ist in der FR 371 537 A eine formschlüssige Verbindungsvorrichtung beschrieben, die zwischen einem Ventil, das an eine durchgehende Bremsleitung von Eisenbahnzügen oder an eine andere Warn- und/oder Anzeigeeinrichtung angeschlossen ist, und einer Welle, die von Hebeln gesteuert ist, welche an auf dem Gleis angebrachten Prellböcken bzw. Klopfern vorbeiführen, wodurch die Warn- und/oder Anzeigeeinrichtung betätigt wird.

Die CN 2 823 073 Y beschreibt eine opto-akustische Anschlagvorrichtung eines Bremssystems, die einen Fahrzeugnutzer auffordert das Bremssystem zu überprüfen, insbesondere die Bremsbeläge. Bei einem konventionellen Bremssystem kann das Bremspedal aufgrund abgenutzter Bremsbeläge bis zum tiefsten Punkt durchgetreten werden. Durch das vergrößerte Spiel des durchgetretenen Bremspedals ist ein Kontakt zu der Anschlagvorrichtung hergestellt. Dadurch wird eine hintere Endabdeckung einer Isolierhülse der Anschlagvorrichtung derart verschoben, dass eine in der Isolierhülse angeordnete Metallführungsstange mit einem Metallzylinder in Berührung kommt. Der Metallzylinder ist mit einem Ton- und Lichtalarm verbunden, der durch die hergestellte leitende Verbindung ausgelöst wird. Aus dem Stand der Technik sind auch US 2018/265062 A1 und US 2020/114894 A1 bekannt, die Mittel zur Verbesserung der Montage am Fahrzeugrahmen aufweisen.

Der Erfindung liegt die Aufgabe zugrunde, eine Baugruppe eines Bremssystems eines Fahrzeugs gemäß der im Oberbegriff des Patentanspruches 1 angegebenen Art derart weiterzubilden, dass ein Lagerungsverlust der Baugruppe mittels einfachen, kostengünstigen und zuverlässigen Mitteln rasch erkennbar ist, um Schäden an der Baugruppe weitgehend zu verhindern.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst eine Baugruppe eines insbesondere elektrohydraulischen Bremssystems für ein Fahrzeug wenigstens ein Bremsregelmodul, das eine elektronisch angesteuerte Druckbereitstellungseinrichtung aufweist. Die Druckbereitstellungseinrichtung kann insbesondere einen Hydraulikblock mit einer Bremsdrucksteuerung, einem Elektromotor und einer Pumpe aufweisen. Das Bremsregelmodul kann auch als Bremsregelsystem bezeichnet werden.

Im eingebauten Zustand der Baugruppe ist die Druckbereitstellungseinrichtung mit wenigstens einer Radbremse des Fahrzeugs fluidleitend verbunden. Die Druckbereitstellungseinrichtung ist über Fluidanschlüsse und Fluidleitungen für ein Bremsfluid mit der Radbremse gekoppelt. Die Druckbereitstellungseinrichtung wird in Abhängigkeit von Daten und einer Vielzahl von unterschiedlichen Fahrzeugsensoriken durch die elektronische Steuereinheit angesteuert, um einen Bremsdruck in der Radbremse aufzubauen.

Das Bremsregelmodul ist im eingebauten Zustand der Baugruppe über eine Haltevorrichtung mit der Fahrzeugkarosserie verbunden. Das Bremsregelmodul kann beispielsweise ein Gehäuse aufweisen, das mehrfach mit der Haltevorrichtung verschraubt ist, wobei die Haltevorrichtung mit der Fahrzeugkarosserie verbunden ist, beispielsweise einem Längsträger oder einer Spritzwand, die den Motorraum von der Fahrgastzelle trennt. Die Haltevorrichtung kann beispielsweise als eine Leiste, ein U-Profil, ein Freiformteil oder dergleichen ausgebildet sein. Es ist denkbar, dass sie aus Metall oder aus Kunststoff gebildet ist.

Erfindungsgemäß ist das Bremsregelmodul mit einer mechanischen Anschlagvorrichtung verbunden, die im eingebauten Zustand der Baugruppe über einen Abstand beabstandet zu einem angrenzenden Fahrzeugbauteil angeordnet ist und durch Interaktion mit dem Fahrzeugbauteil bei einem Lagerungsverlust des Bremsregelmoduls ein Warnsignal ausgibt.

Die Anschlagvorrichtung weist bei intaktem Zustand der Haltevorrichtung einen definierten Abstand zum angrenzenden Fahrzeugbauteil auf. Der Abstand ist in Fahrzeuglängsrichtung, in Fahrzeugquerrichtung und/oder in Fahrzeughochrichtung vorbestimmt. Der definierte Abstand ist derart konzipiert, dass im Versagensfall der Haltevorrichtung, beispielsweise durch eine Lockerung und/oder einen Bruch an einer beliebigen Stelle, die Anschlagvorrichtung aufgrund schwingungsmechanischen Anregungen des Fahrwerks während des Fahrbetriebs, z.B. durch Beschleunigungen oder Verzögerungen, durch Querdynamiken wie Kurvenfahrten und/oder bei Fahrt über Schwellen, Schlaglöcher oder dergleichen, durch die verstärkte Schwingungen mit dem insbesondere unmittelbar angrenzenden Fahrzeugbauteil interagiert, indem sie wiederholt darauf auftrifft oder schlägt. Dabei ist der Abstand in Abhängigkeit einer unmittelbaren Umgebung der Baugruppe und unter Berücksichtigung von Schwingungseinwirkungen und Toleranzen konzipiert. Dadurch trifft die Anschlagvorrichtung bei Lagerungsverlust schon früh auf das angrenzende Fahrzeugbauteil. Auf diese Weise kann die Bewegungsbahn des Bremsregelmoduls begrenzt werden.

Aufgrund von schwingungstechnischen Anregungen wiederholt sich die mechanische Interaktion der Anschlagvorrichtung mit dem angrenzenden Fahrzeugbauteil, das als Resonanzkörper dient und durch das Auftreffen der Anschlagvorrichtung ein sich wiederholendes akustisches Signal ausgibt, das insbesondere über Luftschall und/oder Körperschall in die Fahrgastzelle übertragen wird. Die Anschlagvorrichtung dient also als Anschlagakustik bzw. Schallquelle, die während des Fahrbetriebs einen Hinweis oder ein Warnsignal über den Verlust der Lagerung der Baugruppe auslöst. Die Anschlagvorrichtung stellt eine Kontrolleinrichtung dar, die einen Fahrzeugnutzer mit sehr einfachen und günstigen Mitteln darüber informiert, dass die Haltevorrichtung locker, defekt und/oder gebrochen ist.

In vorteilhafter Weise übt die Anschlagvorrichtung ein mechanisch angeregtes, akustisches Warnsignal ohne elektronische Anzeigen, optische Signale oder dergleichen aus, welches vor einer dauerhaften Überlastung des Bremsregelmoduls, der Fluidleitungen und Fluidanschlüsse warnt, wodurch Beschädigungen am Bremssystem reduziert oder größtenteils vermieden sind.

Bevorzugt ist die Anschlagvorrichtung kraftschlüssig, formschlüssig und/oder stoffschlüssig mit dem Bremsregelmodul verbunden. Die Anschlagvorrichtung kann unter anderem am Bremsregelmodul angeschraubt, angeklemmt, angeschweißt, eingespritzt und /oder angeklebt sein.

Gemäß einer Ausführungsform weist die Anschlagvorrichtung wenigstens ein Anschlagelement auf. Das Anschlagelement dient als eine Anschlagfläche, d.h. als ein körperliches Hindernis oder eine Stelle, die bei Verlust der Lagerung an ein insbesondere unmittelbar angrenzendes Fahrzeugbauteil schlägt oder trifft. Das Anschlagelement kann beispielsweise als eine Leiste ausgebildet sein, die auf einfache Weise am Bremsregelmodul in einem vordefinierten Abstand zum Fahrzeugbauteil angeordnet werden kann.

Vorzugsweise ist das Anschlagelement aus einem harten und/oder festen Werkstoff ausgebildet. Das Anschlagelement ist robust und weist eine geringe Dämpfung sowie eine hohe Übertragung des akustischen Impulses auf. Das Anschlagelement kann bspw. aus Kunststoff und/oder Metall ausgebildet sein. Es kann z.B. als eine Metallleiste ausgebildet sein.

Vorzugsweise ist die Anschlagvorrichtung mit einem Verbindungselement verbunden, über welches das Bremsregelmodul mit der Haltevorrichtung verbunden ist. Das Bremsregelmodul ist unter Zwischenschaltung eines Verbindungselements mit der Haltevorrichtung verbunden. D.h. die Anschlagvorrichtung kann mittelbar mit dem Bremsregelmodul verbunden sein. Das Verbindungselement kann beispielsweise als Adapter zur Verbindung des Bremsregelmoduls mit der Haltevorrichtung dienen. Am Verbindungselement ist beispielsweise ein Anschlagelement ausgebildet, das über einen vorbestimmten Abstand beabstandet zum angrenzenden Fahrzeugbauteil, beispielsweise die Fahrzeugkarosserie, angeordnet ist. Wenn die Haltevorrichtung bricht oder sich lockert, trifft das Anschlagelement durch die Schwingungsanregung des Fahrzeugs wiederholt auf das angrenzende Fahrzeugbauteil und verursacht ein klopfendes Geräusch.

Gemäß einer Ausführungsform ist das Bremsregelmodul dazu ausgebildet radindividuelle Bremsdrücke aufzubauen. Das Bremsregelmodul kann z.B. als ein ESC-Aggregat, welches auch als ESP-Aggregat bezeichnet werden kann, eines konventionellen elektrohydraulischen Bremssystems ausgebildet sein, das ein elektronisch gesteuertes Fahrerassistenzsystem aufweist. Das Bremsregelmodul ist über die Druckbereitstellungseinrichtung mechanisch bzw. fluidisch mit einer Bremsbetätigungseinheit des Fahrzeugs verbunden, d.h. mit einem Bremskraftverstärker, der über ein Bremspedal von einem Fahrzeugnutzer betätigbar ist. Das ESC-Aggregat greift lediglich in einen Bremsvorgang ein, wenn es sensorisch einen kritischen Fahrzeugzustand erkennt. Dann wird die Druckbereitstellungseinrichtung über elektronische Signale angesteuert, um beispielsweise nur einen Bremssattel einer Radbremse hydraulisch ohne einen Druckeingang des Hauptzylinders zu betreiben, um dadurch das Fahrzeug zu stabilisieren.

Alternativ ist es denkbar, dass das Bremsregelmodul durch eine Integration des ESC-Aggregats in den Bremskraftverstärker ausgebildet ist. Die Kombination wird als integriertes Bremsregelsystem bzw. Bremsregelmodul bezeichnet.

Gemäß einer alternativen Ausführungsform ist das Bremsregelmodul als das im Normalbetrieb eines "Brake-by-Wire" Bremssystems aktive, erste Bremsregelmodul ausgebildet, das auch als primäres Bremsregelmodul bezeichnet werden kann. D.h. das erste Bremsregelmodul löst in Abhängigkeit von Daten unterschiedlicher Fahrzeugsensoriken einen Bremsvorgang des Fahrzeugs aus, indem die Druckbereitstellungseinrichtung angesteuert wird, um einen Bremsdruck in den Radbremsen zu erzeugen. Bei der Bauart "Brake-By-Wire" ist durch die mechanische Entkopplung einer Betätigungseinrichtung und einer Stelleinrichtung des Bremssystems eine unabhängige Anordnung des Bremsregelmoduls an einer beliebigen Position im Fahrzeugpackage möglich, so dass ein Fahrzeugbauraum optimal genutzt werden kann.

Bevorzugt ist die Anschlagvorrichtung mit einem Fluidbehälter des ersten Bremsregelmoduls verbunden. Bei einem "Brake-By Wire" Bremssystem ist das im Normalbetrieb aktive erste Bremsregelmodul fluidisch mit einem Fluidbehälter für Bremsfluid verbunden, das zum Erzeugen des Bremsdrucks in den Radbremsen verwendet wird. Am Fluidbehälter kann ein Anschlagelement ausgebildet bzw. befestigt oder eingespritzt sein. Bei defekter Haltevorrichtung oder Lagerungsverlust der Baugruppe kann das Anschlagelement beispielsweise aufgrund einer Fahrzeugbeschleunigung wiederholt Kontakt zu einem angrenzenden Fahrzeugbauteil herstellen, wodurch ein Klopfgeräusch bzw. Warnsignal verursacht ist.

Gemäß einer bevorzugten Ausführungsform stellt das Fahrzeugbauteil ein redundantes, zweites Bremsregelmodul des "Brake-By Wire" Bremssystems dar, das auch als sekundäres Bremsregelmodul bezeichnet wird. Bei dieser Art Bremssystem ist eine Rückfallebene vorhanden. D.h. die Baugruppe umfasst ein redundantes, zweites Bremsregelmodul, welches kommunizierend mit dem ersten Bremsregelmodul verbunden ist und das autonome Bremsen im Falle einer Störung des ersten Bremsregelmoduls übernimmt. Das redundante zweite Bremsregelmodul ist insbesondere unmittelbar vertikal unterhalb des ersten Bremsregelmoduls verbaut. Die jeweiligen Bremsregelmodule sind fluidtechnisch über Fluidanschlüsse und Fluidleitungen einerseits mit dem Fluidbehälter und andererseits mit den Radbremsen verbunden. Ein Bruch oder eine Lockerung der Haltevorrichtung führt dazu, dass die Anschlagvorrichtung wiederholt auf das redundante zweite Bremsregelmodul schlägt und ein akustisches Warnsignal verursacht. Insbesondere kann die Anschlagvorrichtung wiederholt auf ein Gehäuse, z.B. ein Metallgehäuse des redundanten zweiten Bremsregelmoduls treffen.

Vorzugsweise ist das Fahrzeugbauteil als ein Element der Fahrzeugkarosserie ausgebildet. Es ist denkbar, dass die Anschlagvorrichtung über einen definierten Abstand beispielsweise zu einem Federbeindom, einem Längsträger, der Stirnwand des Motorraums, einer Verbindungsstrebe oder einem anderen Teil der Fahrzeugkarosserie angeordnet ist. Bei einem Lagerungsverlust der Baugruppe oder bei einem Bruch der Haltevorrichtung weist das Bremsregelmodul eine erhöhte Bewegungsfreiheit auf. Durch die Auslenkung des Bremsregelmoduls trifft oder schlägt die Anschlagvorrichtung wiederholt auf die Fahrzeugkarosserie. Diese ist robust ausgelegt und hauptsächlich aus Metall gebildet, so dass als ein Resonanzkörper wirkt. Dadurch wird das akustische Warnsignal erfolgreich in die Fahrgastzelle weitergeleitet.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: eine perspektivische Darstellung einer Baugruppe eines aus dem Stand der Technik bekannten Bremssystems schräg von vorne; und
- Fig. 2: eine seitliche Ansicht einer erfindungsgemäßen Baugruppe eines Bremssystems.

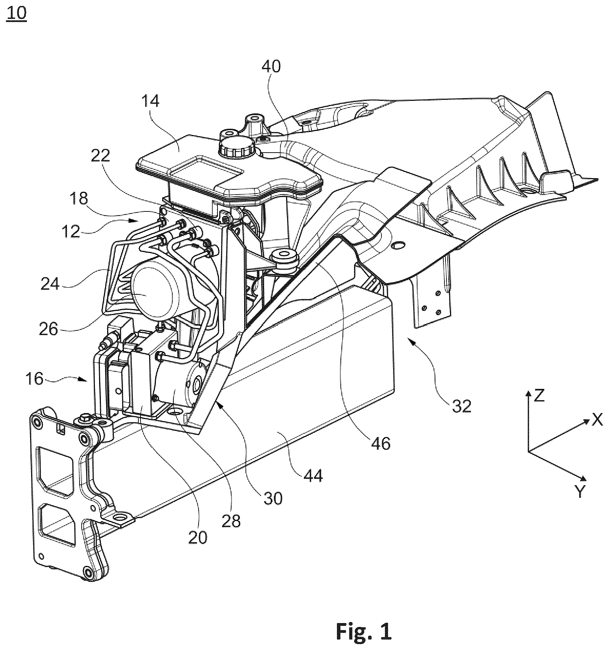

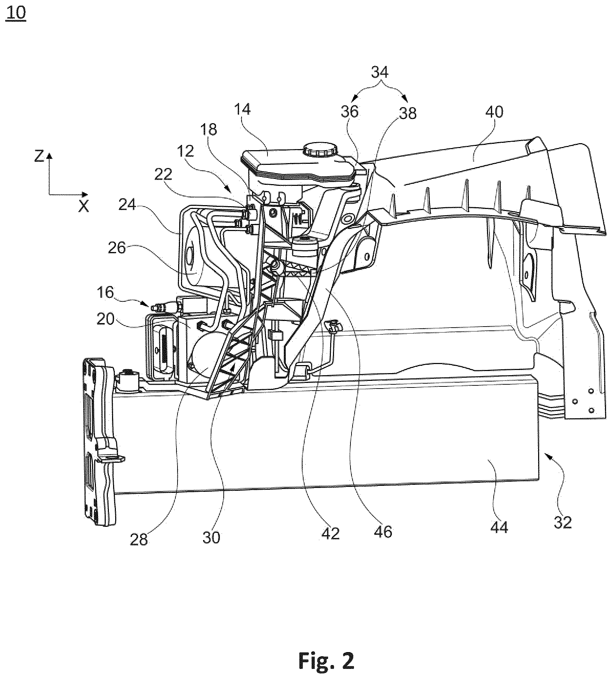

In Fig. 1 und Fig. 2 sind eine insgesamt mit der Bezugsziffer 10 bezeichnete Baugruppe eines "Brake-By-Wire" Bremssystems im eingebauten Zustand gezeigt.

Die Baugruppe 10 weist ein erstes Bremsregelmodul 12 auf, das fluidleitend mit einem Fluidbehälter 14 für ein Bremsfluid verbunden ist. Der Fluidbehälter 14 ist gattungsgemäß in Vertikalrichtung Z über dem ersten Bremsregelmodul 12 verbaut.

Die Baugruppe 10 umfasst ein zweites Bremsregelmodul 16, das vorliegend in Fahrzeughochrichtung Z unter dem ersten Bremsregelmodul 12 angeordnet ist. Die beiden Bremsregelmodule 12, 16 sind kommunizierend miteinander verbunden. Im Normalbetrieb des "Brake-by-Wire" Bremssystems dient das erste Bremsregelmodul 12, auch primäres Bremsregelmodul genannt, zum aktiven Aufbau eines Bremsdrucks im Bremssystem. Das zweite Bremsregelmodul 16, das auch als sekundäres Bremsregelmodul bezeichnet wird, bildet eine redundante Rückfallebene, die bei Ausfall des ersten Bremsregelmoduls 12 eingreift und einen Bremsdruck aufbaut.

Das erste Bremsregelmodul 12 weist vorliegend ein erstes Gehäuse 18 und das zweite Bremsregelmodul 16 ein zweites Gehäuse 20 auf. Die Gehäuse 18, 20 sind mit Fluidanschlüssen 22 ausgebildet, an denen Fluidleitungen 24 angeschlossen sind. Die Gehäuse 18, 20 sind fluidtechnisch einerseits mit dem Fluidbehälter 14 und andererseits mit vorliegend nicht dargestellten Bremskreisen der Radbremsen des Fahrzeugs verbunden. Zur Entlüftung des Bremssystems und zur Reduzierung von Ansaugwiderständen sind die Bremsregelmodule 12, 16 vertikal unter dem Fluidbehälter 14 angeordnet.

Im Gehäuse 18 des ersten Bremsregelmoduls 12 ist eine vorliegend nicht dargestellte elektronische Steuereinheit integriert, die im Normalbetrieb des Bremssystems eine im Bremsregelmodul 12 angeordnete ebenfalls nicht dargestellte Bremsdrucksteuerung ansteuert, welche wiederum einen elektromechanischen Aktuator 26 des Bremsregelmoduls 12 ansteuert, um das Bremsfluid in den Bremskreisen der Radbremsen unter Druck zu setzen. Die elektronische Steuereinheit, die Bremsdrucksteuerung und/oder der Aktuatoren 26 sind insbesondere im ersten Gehäuse 18 angeordnet.

Im Falle eines Ausfalls des ersten Bremsregelmoduls 12 übernimmt das zweite Bremsregelmodul 16 die Bremsfunktion. Das zweite Bremsregelmodul 16 weist ebenfalls eine vorliegend nicht dargestellte elektronische Steuereinheit zur Ansteuerung der im Bremsregelmodul 16 angeordneten Bremsdrucksteuereinrichtung, welche wiederum einen Aktuator 28 ansteuert, um einen Bremsdruck aufzubauen. Die elektronische Steuereinheit, die Bremsdrucksteuereinrichtung und/oder der Aktuator 28 des zweiten Bremsregelmoduls 16 sind insbesondere im zweiten Gehäuse 20 angeordnet.

In Fig. 1 und Fig. 2 sind das erste Bremsregelmodul 12 sowie das zweite Bremsregelmodul 16 bzw. deren jeweilige Gehäuse 18, 20 über eine Haltevorrichtung 30 mit einer Fahrzeugkarosserie 32 verbunden. Das erste Bremsregelmodul 12 ist beispielsweise mehrfach mit der Haltevorrichtung 30 verschraubt, die wiederum mit der Fahrzeugkarosserie 32 verbunden ist. Das zweite Bremsregelmodul 16 stützt sich über sein Gehäuse 20 unter Zwischenschaltung der Haltevorrichtung 30 auf einem Längsträger 44 der Fahrzeugkarosserie 32 ab.

In Fig. 1 ist ein Versagensfall der Haltevorrichtung 30, beispielsweise durch einen Bruch an einer beliebigen Stelle, durch mehrere blitzförmige Darstellungen zum Ausdruck gebracht.

In Fig. 2 ist die erfindungsgemäße Anschlagvorrichtung 34 der Baugruppe 10 gut zu erkennen. Die Anschlagvorrichtung 34 ist vorliegend mit dem ersten Bremsregelmodul 12 verbunden. Die Anschlagvorrichtung 34 dient zur Ausfallerkennung der Haltevorrichtung 30 bzw. zur Erkennung eines Lagerungsverlustes der Baugruppe 10.

Die Anschlagvorrichtung 34 ist vorliegend mittelbar sowie unmittelbar mit dem ersten Bremsregelmodul 12 verbunden. Die Anschlagvorrichtung 34 weist Anschlagelemente 36, 38 auf. Im intakten Zustand der Haltevorrichtung 30 weisen die Anschlagelemente 36, 38 in Fahrzeuglängsrichtung X, in Fahrzeugquerrichtung Y und/oder in Fahrzeughochrichtung Z einen definierten Abstand zur Fahrzeugkarosserie 32 auf.

Im defekten Zustand der Haltevorrichtung 30 bzw. bei Lagerungsverlust der Baugruppe 10 ist die Anschlagvorrichtung 34 vorliegend derart konzipiert, dass wenigstens eines der Anschlagelemente 36, 38 aufgrund der verstärkten Schwingungen des ersten Bremsregelmoduls 12 in Fahrzeuglängsrichtung X, in Fahrzeugquerrichtung Y und/oder in Fahrzeughochrichtung Z wiederholt auf die Fahrzeugkarosserie 32 trifft, die beispielweise als Resonanzkörper dient. Durch die mechanische Interaktion der Anschlagelemente 36, 38 mit der Fahrzeugkarosserie 32 wird eine akustischen Auffälligkeit bewirkt, d.h. ein mechanisches, akustisches Warnsignal wird ausgegeben, das insbesondere über Luftschall und/oder Körperschall in die Fahrgastzelle übertragen wird. Die Anschlagelemente 36, 38 sind bevorzugt aus Metall und/oder hartem Kunststoff gebildet, damit der akustische Impuls möglichst ungedämpft in die Fahrgastzelle eindringt.

Vorliegend ist das Anschlagelement 36 der Anschlagvorrichtung 34 beispielsweise stoffschlüssig mit dem Fluidbehälter 14 verbunden. Das Anschlagelement 36 ist z.B. aus Kunststoff gebildet oder als Metallelement in den Fluidbehälter 14 eingespritzt. In Fahrzeuglängsrichtung X ist es vorliegend über einen definierten Abstand beabstandet zu einem Federbeindom 40 der Fahrzeugkarosserie 32 angeordnet. Im Versagensfall der Haltevorrichtung wird z.B. durch eine Beschleunigung des Fahrzeugs in Fahrzeuglängsrichtung X der Abstand zwischen dem Federbeindom 40 und dem Anschlagelement 36 verringert und das Anschlagelement 36 trifft oder schlägt wiederholend auf den Federbeindom 40.

Das erste Bremsregelmodul 12 ist vorliegend unter Zwischenschaltung eines Verbindungselements 42 mit der Haltevorrichtung 30 verbunden. Am Verbindungselement 42 ist vorliegend das Anschlagelement 38 ausgebildet. Es kann beispielsweise durch eine Metallleiste oder dergleichen gebildet sein. Das Anschlagelement 38 ist vorliegend über jeweils einen vorbestimmten Abstand in Fahrzeuglängsrichtung X beabstandet zur Fahrzeugkarosserie 32 und in Fahrzeughochrichtung Z beabstandet zu einer Verbindungsstrebe 46 der Fahrzeugkarosserie 32 angeordnet. Wenn die Haltevorrichtung 30 bricht oder sich lockert, trifft das Anschlagelement 38 durch die Schwingungsanregung des Fahrzeugs wiederholt auf die Fahrzeugkarosserie 32 und/oder die Verbindungsstrebe 46 und verursacht ein klopfendes Geräusch.

## Patentansprüche

1. Baugruppe (10) für ein Bremssystem eines Fahrzeugs, umfassend wenigstens ein Bremsregelmodul (12, 16), das eine elektronisch angesteuerte Druckbereitstellungseinrichtung aufweist, die im eingebauten Zustand der Baugruppe (10) mit wenigstens einer Radbremse des Fahrzeugs fluidleitend gekoppelt ist, und wobei das Bremsregelmodul (12, 16) mit einer Haltevorrichtung (30) zur Anordnung an eine Fahrzeugkarosserie (32) verbunden ist,
**dadurch gekennzeichnet, dass**
das Bremsregelmodul (12, 16) eine mechanische Anschlagvorrichtung (34) aufweist, die im eingebauten Zustand der Baugruppe (10) über einen Abstand beabstandet zu einem angrenzenden Fahrzeugbauteil angeordnet ist und durch Interaktion mit dem Fahrzeugbauteil bei einem Lagerungsverlust des Bremsregelmoduls (12, 16) ein Warnsignal ausgibt.

2. Baugruppe nach Anspruch 1,
**dadurch gekennzeichnet, dass**
die Anschlagvorrichtung (34) kraftschlüssig, formschlüssig und/oder stoffschlüssig mit dem Bremsregelmodul (12, 16) verbunden ist.

3. Baugruppe nach einem der Ansprüche 1 oder 2,
**dadurch gekennzeichnet, dass**
die Anschlagvorrichtung (34) wenigstens ein Anschlagelement (36, 38) aufweist.

4. Baugruppe nach Anspruch 3,
**dadurch gekennzeichnet, dass**
das Anschlagelement (36, 38) aus einem harten und/oder festen Werkstoff gebildet ist.

5. Baugruppe nach einem der Ansprüche 1 bis 4,
**dadurch gekennzeichnet, dass**
die Anschlagvorrichtung (34) an einem Verbindungselement (40) angeordnet ist, über welches das Bremsregelmodul (12, 16) mit der Haltevorrichtung (30) verbunden ist.

6. Baugruppe nach einem der Ansprüche 1 bis 5,
**dadurch gekennzeichnet, dass**
das Bremsregelmodul (12, 16) dazu ausgebildet ist radindividuelle Bremsdrücke aufzubauen.

7. Baugruppe nach einem der Ansprüche 1 bis 5,
**dadurch gekennzeichnet, dass**
das Bremsregelmodul (12,16) als das im Normalbetrieb eines "Brake-by-Wire" Bremssystems aktive, erste Bremsregelmodul (12) ausgebildet ist.

8. Baugruppe nach Anspruch 7,
**dadurch gekennzeichnet, dass**
die Anschlagvorrichtung (34) mit einem Fluidbehälter (14) des ersten Bremsregelmoduls (12) verbunden ist.

9. Baugruppe nach Anspruch 7 oder 8,
**dadurch gekennzeichnet, dass**
das Fahrzeugbauteil als ein redundantes, zweites Bremsregelmodul (16) ausgebildet ist.

10. Baugruppe nach einem der Ansprüche 1 bis 9,
**dadurch gekennzeichnet, dass**
das Fahrzeugbauteil als ein Element der Fahrzeugkarosserie (32) ausgebildet ist.

## Claims

1. Assembly (10) for a brake system of a vehicle, comprising at least one brake control module (12, 16) which has an electronically controlled pressure supply device which, in the installed state of the assembly (10), is fluidically coupled to at least one wheel brake of the vehicle, and wherein the brake control module (12, 16) is connected to a holding device (30) for arrangement on a vehicle body (32), **characterized in that**
the brake control module (12, 16) has a mechanical stop device (34) which, in the installed state of the assembly (10), is spaced apart at a distance from an adjacent vehicle component and, by interaction with the vehicle component, outputs a warning signal in the event of a loss of support of the brake control module (12, 16).

2. Assembly according to claim 1,
**characterized in that**
the stop device (34) is connected to the brake control module (12, 16) in a force-fitting, form-fitting and/or integral manner.

3. Assembly according to any one of claims 1 or 2,
**characterized in that**
the stop device (34) has at least one stop element (36, 38).

4. Assembly according to claim 3,
**characterized in that**
the stop element (36, 38) is formed from a hard and/or solid material.

5. Assembly according to any one of claims 1 to 4,
**characterized in that**
the stop device (34) is arranged on a connecting element (40) via which the brake control module (12, 16) is connected to the holding device (30).

6. Assembly according to any one of claims 1 to 5,
**characterized in that**
the brake control module (12, 16) is designed to build up individual wheel brake pressures.

7. Assembly according to any one of claims 1 to 5,
**characterized in that**
the brake control module (12, 16) is designed as the first brake control module (12) which is active during normal operation of a brake-by-wire brake system.

8. Assembly according to claim 7,
**characterized in that**
the stop device (34) is connected to a fluid reservoir (14) of the first brake control module (12).

9. Assembly according to claim 7 or 8,
**characterized in that**
the vehicle component is designed as a redundant, second brake control module (16).

10. Assembly according to any one of claims 1 to 9,
**characterized in that**
the vehicle component is formed as an element of the vehicle body (32).

## Revendications

1. Ensemble (10) pour un système de freinage d'un véhicule, comprenant au moins un module de régulation de freinage (12, 16) qui présente un appareil de mise à disposition de pression à commande électronique qui, à l'état monté de l'ensemble (10), est couplé par conduction de fluide à au moins un frein de roue du véhicule, et dans lequel le module de régulation de freinage (12, 16) est connecté à un dispositif de maintien (30) pour l'agencement sur une carrosserie de véhicule (32), **caractérisé en ce que**
le module de régulation de freinage (12, 16) présente un dispositif de butée mécanique (34) qui, à l'état monté de l'ensemble (10), est disposé à une distance d'un composant de véhicule adjacent et émet un signal d'avertissement par interaction avec le composant de véhicule en cas de perte de support du module de régulation de freinage (12, 16).

2. Ensemble selon la revendication 1,
**caractérisé en ce que**
le dispositif de butée (34) est connecté au module de régulation de freinage (12, 16) à force, par complémentarité de formes et/ou par accouplement de matière.

3. Ensemble selon l'une quelconque des revendications 1 ou 2,
**caractérisé en ce que**
le dispositif de butée (34) présente au moins un élément de butée (36, 38).

4. Ensemble selon la revendication 3,
**caractérisé en ce que**
l'élément de butée (36, 38) est formé d'un matériau dur et/ou solide.

5. Ensemble selon l'une quelconque des revendications 1 à 4,
**caractérisé en ce que**
le dispositif de butée (34) est disposé sur un élément de connexion (40) par l'intermédiaire duquel le module de régulation de freinage (12, 16) est connecté au dispositif de maintien (30).

6. Ensemble selon l'une quelconque des revendications 1 à 5,
**caractérisé en ce que**
le module de régulation de freinage (12, 16) est conçu de sorte à établir des pressions de freinage individuelles par roue.

7. Ensemble selon l'une quelconque des revendications 1 à 5,
**caractérisé en ce que**
le module de régulation de freinage (12, 16) est conçu comme le premier module de régulation de freinage (12) qui est actif pendant le fonctionnement normal d'un système de freinage « brake-by-wire ».

8. Ensemble selon la revendication 7,
**caractérisé en ce que**
le dispositif de butée (34) est connecté à un récipient de fluide (14) du premier module de régulation de freinage (12).

9. Ensemble selon la revendication 7 ou 8,
**caractérisé en ce que**
le composant de véhicule est conçu comme un second module de régulation de freinage (16) redondant.

10. Ensemble selon l'une quelconque des revendications 1 à 9,
**caractérisé en ce que**
le composant de véhicule est conçu comme un élément de la carrosserie de véhicule (32).
